# EUROPEAN PATENT APPLICATION

(11) **EP 3 249 653 A1**
(43) Date of publication of application: **29.11.2017**
(21) Application number: 17150695.9
(22) Date of filing: 09.01.2017
(51) Int. Cl.: G11B 27/10, G11B 27/031, G06F 3/16, G11B 31/00, H04R 1/08, H04R 5/02, H04S 1/00

(54) **SYSTEMS AND METHODS FOR RECORDING AND PLAYING AUDIO**

(30) Priority: 08.01.2016 US 201662276588 P
(71) Applicant: KIDdesigns Inc., Rahway, NJ 07065 (US)
(72) Inventor: ASHKENAZI, Isaac, Rahway, NJ New Jersey 07065 (US); BROWN, Matthew, Rahway, NJ New Jersey 07065 (US)
(74) Representative: Murgitroyd & Company

(57) **Abstract**

An audio device can include audio inputs, such as a microphone and an auxiliary input, as well as audio outputs, such as one or more speakers. The audio device can include a memory element for storing pre-recorded audio files, such as songs. The memory element also can be used to allow a user to record his or her own audio. In some implementations, the memory element can include memory slots allocated into different buckets. For example, a first bucket can be used to store built-in songs, a second bucket can be used to store recorded music, and a second bucket can be used to store voice audio recorded by the user. The audio device can output audio saved in the memory element. For example, in some implementations, the audio device can output a pre-recorded song overlaid with vocals recorded by the user.

## Description

### RELATED APPLICATIONS

This application claims priority to United States Provisional Patent Application No. 62/276588, filed on January 8, 2016 and entitled "SYSTEMS AND METHODS FOR RECORDING AND PLAYING AUDIO," which is incorporated herein by reference in its entirety.

### BACKGROUND

Audio devices can be configured to allow a user to play and record music. A user may record voice audio with preselected music, for example. However, it can be difficult for a user to manage multiple different recordings for different purposes in an audio device. It also can be difficult for a user to manage (e.g., play, delete, or record over) recordings that have been previously stored in memory with a limited or fixed size.

### SUMMARY OF THE DISCLOSURE

Aspects and implementations of the present disclosure are directed to systems and methods for recording and playing audio. One innovative aspect of the subject matter described in this disclosure can be implemented in an audio device. The audio device can include audio inputs, such as one or more microphones and one or more auxiliary inputs, as well as audio outputs, such as one or more speakers. The audio device can include a memory element for storing pre-recorded audio files, such as songs. The memory element also can be used to allow a user to record his or her own audio. In some implementations, the memory element can include memory slots allocated into different buckets. For example, a first bucket can be used to store built-in songs, a second bucket can be used to store recorded music, and a second bucket can be used to store voice audio recorded by the user. The audio device can output audio saved in the memory element. For example, in some implementations, the audio device can output a pre-recorded song overlaid with voice audio recorded by the user.

In some implementations, the audio device can include a simple user interface allowing the user to manage audio recordings. Allocating the memory into three separate buckets can simply the process of recording and playing songs. Each bucket can include a fixed number of slots for storing audio, and each slot can be of a fixed length. Buttons on the audio device can be associated with individual slots, allowing a user to easily record audio into a slot or play the audio associated with a slot. Thus, the audio device can be suitable for use by children, for example to facilitate managing audio for sing-along.

Another aspect of the disclosure is directed to a device for recording and playing audio using memory slots of a predetermined fixed size. The device can include one or more audio outputs for outputting audio stored in memory on the device. The device can include one or more audio inputs for receiving audio to be stored in memory on the device. The memory can be allocated into a plurality of buckets each including one or more slots of a predetermined fixed size. A first bucket of the plurality of buckets can include a first one or more slots of memory. Each of the first one or more slots of memory can store a predetermined audio in read only memory playable via the one or more audio outputs. A second bucket of the plurality of buckets can include a second one or more slots of memory. Each of the second one or more slots of memory can be configured to store audio recorded via the one or more audio inputs and playable via the one or more audio outputs. The device can include a plurality of inputs to receive selection by a user of audio stored in memory. Each of the plurality of inputs can be configured to correspond to a bucket of the plurality of buckets and a slot of the bucket. The device can include a memory manager configured to select the audio to be played via the one or more audio outputs from a selected one of the slots of a selected one of the plurality of buckets, responsive to a selection of an input of the plurality of inputs corresponding to the selected bucket and the selected slot.

In some implementations, a third bucket of the plurality of buckets can include a third one or more slots of memory. Each of the third one or more slots of memory can be configured to receive voice input from the user via the one or more audio inputs and record the voice input in one of the third one or more slots of memory. In some implementations, the device can be further configured to record the voice input while playing audio from a selected bucket and slot of at least one of the plurality of buckets. The voice input and the playing audio can be recorded to one of the third one or more slots of memory.

In some implementations, the plurality of inputs can include buttons selectable by the user. In some implementations, each of the plurality of slots of each of the plurality of buckets can correspond to a respective button. Audio from one of the plurality of buckets and one of the plurality of slots can be played by pressing and releasing the corresponding button. In some implementations, the device can include one or more lights corresponding to each of the plurality of inputs to indicate whether a corresponding input is selected by the user. In some implementations, each of the first one or more slots of the first bucket can store as the predetermined audio a built in song.

In some implementations, the predetermined fixed size of the first one or more slots differs from the predetermined fixed size of the second one or more slots. In some implementations, the predetermined fixed size of the first one or more slots is the same as the predetermined fixed size of the second one or more slots. In some implementations, the predetermined fixed size corresponds to a predetermined amount of time of audio. In some implementations, the device can be further configured to automatically stop recording audio to a slot upon reaching the predetermined fixed size of the slot. In some implementations, the device can be further configured to automatically detect silence of a predetermined length, and responsive to the automatic detection, record audio to a next slot in a bucket of the plurality of buckets.

Another aspect of the disclosure is directed to a method for recording and playing audio using memory of a predetermined fixed size. The method can include receiving, by a device having one or more audio outputs for outputting audio stored in memory on the device and one or more audio inputs for receiving audio to be stored in memory on the device, a first selection by a user of a first input of a plurality of inputs of the device. The method can include selecting, by a memory manager of the device, audio to be played via the one or more audio outputs from a first slot of a first bucket in memory responsive to the first selection of the first input of the plurality of inputs corresponding to the first bucket and the first slot of memory. The memory can be allocated into a plurality of buckets including the first bucket. Each of the plurality of buckets can include one or more slots of a predetermined fixed size and the first bucket of the plurality of buckets can include the first slot of memory storing a predetermined audio in read only memory playable via the one or more audio outputs. The method can include receiving, by the device, a second selection by the user of a second input of the plurality of inputs. The method can include selecting, by the memory manager, a second slot of a second bucket of the plurality of buckets corresponding to the second input. The second slot of the second bucket can be configured to store audio recorded via the one or more audio inputs. The method can include storing, by the device, audio acquired via the one or more audio inputs to the second slot of the second bucket until the predetermined fixed size is reached.

In some implementations, a third bucket of the plurality of buckets can include a third one or more slots of memory. The method can further include receiving, by the device, a third selection by the user of a third input of the plurality of inputs corresponding to the third bucket, and storing, by the device, voice input acquired from the user via the one or more audio inputs in one of the third one or more slots of memory. In some implementations, the method can include recording, by the device, the voice input while playing audio from a selected bucket and slot of at least one of the plurality of buckets. The voice input and the playing audio can be recorded to one of the third one or more slots of memory.

In some implementations, the plurality of inputs can include buttons selectable by the user. In some implementations, the method can include receiving, by the device, an indication that a user has pressed and released a fourth input of the plurality of inputs. The method also can include playing, by the device, audio from one of the plurality of buckets and slots corresponding to the fourth input. In some implementations, the device can include one or more lights corresponding to each of the plurality of inputs to indicate whether a corresponding input is selected by the user. The method can further include illuminating, by the device, one of the one or more lights, responsive to receive a selection by the user of a corresponding one of the plurality of inputs. In some implementations, the method can include storing, by the device, in each of the first one or more slots of the first bucket, a built in song.

In some implementations, the predetermined fixed size of the first slot differs from the predetermined fixed size of the second slot. In some implementations, the predetermined fixed size of the first slot is the same as the predetermined fixed size of the second slot. In some implementations, the predetermined fixed size can correspond to a predetermined amount of time of audio. In some implementations, the method includes automatically stopping, by the device, recording audio to the second slot upon reaching the predetermined fixed size of the second slot. In some implementations, the method can include automatically detecting, by the device, silence of predetermined length of time. The method also can include recording, by the device, audio to a next slot in the second bucket responsive to the automatic detection.

These and other aspects and implementations are discussed in detail below. The foregoing information and the following detailed description include illustrative examples of various aspects and implementations, and provide an overview or framework for understanding the nature and character of the claimed aspects and implementations. The drawings provide illustration and a further understanding of the various aspects and implementations, and are incorporated in and constitute a part of this specification.

### BRIEF DESCRIPTION OF THE DRAWINGS

The accompanying drawings are not intended to be drawn to scale. Like reference numbers and designations in the various drawings indicate like elements. For purposes of clarity, not every component may be labeled in every drawing.
Figure 1 is a block diagram of an example audio device, according to an illustrative implementation.
Figure 2 is a perspective view of an example audio device, according to an illustrative implementation.
Figure 3A is a perspective view of a second example audio device, according to an illustrative implementation.
Figure 3B is a perspective view of a third example audio device, according to an illustrative implementation.
Figure 3C is a perspective view of a fourth example audio device, according to an illustrative implementation.

### DETAILED DESCRIPTION

Following below are more detailed descriptions of various concepts related to, and implementations of devices for recording and playing audio. The various concepts introduced above and discussed in greater detail below may be implemented in any of numerous ways, as the described concepts are not limited to any particular manner of implementation. Examples of specific implementations and applications are provided primarily for illustrative purposes.

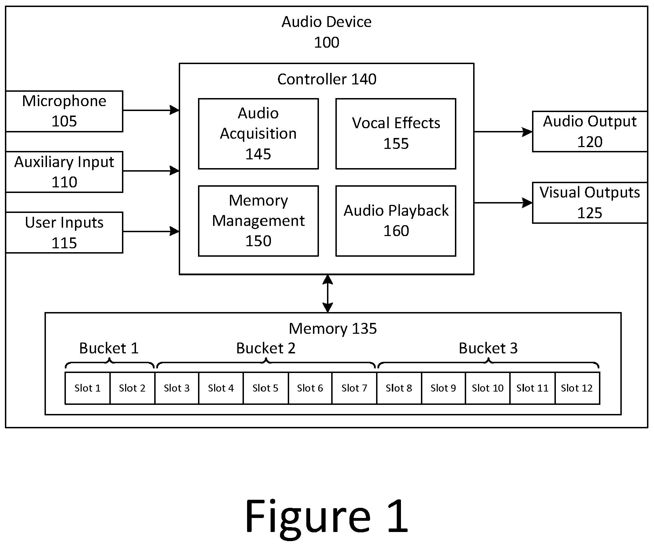

Figure 1 is a block diagram of an example audio device 100, according to an illustrative implementation. The audio device 100 includes a microphone input 105, an auxiliary input 110, and one or more user inputs 115. The audio device includes an audio output 120 and one or more visual outputs 125. A memory 135 includes 12 slots, each capable of storing a digital audio file. The slots are grouped into three separate buckets, labeled Bucket 1, Bucket 2, and Bucket 3. The audio device also includes a controller 140, which communicates with the microphone input 105, the auxiliary input 110, the user inputs 115, the audio output 120, the visual outputs 125, and the memory 135. The controller includes an audio acquisition module 145, a memory management module 150, an analog-to-digital (A/D) converter module 151, a vocal effects module 155, and an audio playback module 160.

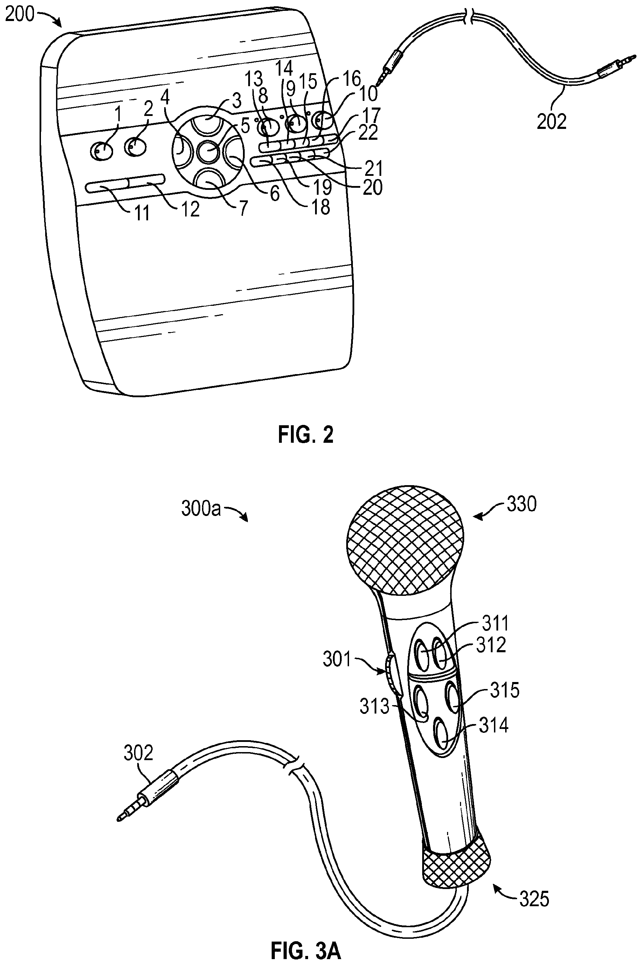

The audio device 100 can be configured to allow a user to record music and voice audio, and to playback music that has been stored in the memory 135. The functionality of the audio device 100 shown in Figure 1 will be described together with the example audio device 200 shown in Figure 2. Figure 2 is a perspective view of an example audio device 200, according to an illustrative implementation. The audio device 200 includes a plurality of buttons labeled 1-22. Each of the buttons 1-22 shown in Figure 2 can correspond to one of the user inputs 115 shown in Figure 1. In some implementations, each of the buttons 1-22 can allow a user to control one aspect of audio recording or playback.

In some implementations, button 1 can be a variable music volume button. Button 1 can be implemented as a rocker switch configured to allow a user to increase the music volume by pushing the switch in a first direction and to decrease the music volume by pushing the switch in a second direction. In other implementations, button 1 can be implemented as a rotatable dial. For example, a user can increase the music volume by turning the rotatable dial in a clockwise direction, and can decrease the music volume by turning the dial in a counterclockwise direction. As shown in Figure 1, the controller 140 can receive a signal corresponding to the music volume button via a respective user input 115, and can change the volume accordingly by appropriately adjusting the audio output 120, which can be implemented as one or more audio speakers. In some implementations, the controller 140 can increase the power of an audio signal applied to the audio output 120 in response to a user request to increase the music volume. Likewise, the controller 140 can decrease the power of the audio signal applied to the audio output 120 in response to a user request to decrease the music volume.

Button 2 shown in Figure 2 can allow a user to adjust the volume of a microphone associated with the audio device 200. In some implementations, one or more handheld microphones may be provided along with the device 200. For example, a handheld microphone can communicate with the audio device 200 through a wired connection to the audio device 200 or through a wireless connection, such as a Bluetooth or wifi connection. In some other implementations, the microphone may be part of the audio device 200. Signals detected by the microphone can be delivered to the controller 140 via the microphone input 105. As discussed above in connection with button 1, button 2 also can be implemented in a variety of ways. For example, button 2 can be implemented as a rocker switch or a rotatable dial configured to allow a user to adjust the microphone volume.

Button 3 can be an on/off switch for the audio device 200. Power may be provided to the audio device 200 by one or more batteries or by an alternating current source received from a standard wall outlet. Button 3 can allow a user to selectively apply or remove electrical power from the power source to the audio device 200. In some implementations, another on/off switch for the audio device 200 can also be provided, for example on a handheld microphone associated with the audio device 200. In some implementations, when the audio device is in an off state, pressing any of the buttons 1-22 can cause the audio device to turn on.

Buttons 4-7 can each correspond to an audio playback function. In some implementations, button 4 can allow a user to select the previous track for playback. For example, the controller 140 can receive input from button 4 via the corresponding user input 115. The audio playback module 160 can then stop the current track from playing, and the memory management module 150 can select the previous track from the memory 135. In some implementations, the previous track can be defined as the track stored in the memory slot directly to the left of the slot associated with the current track (e.g., the slot whose index number is one less than the index number of the current slot). After the previous track has been selected, the audio playback module 160 can send a signal corresponding to the previous track to the audio output 120 to cause the audio device 200 to play the track.

Button 5 can toggle between a "shuffle" function and a "repeat" function. For example, pressing button 5 once can cause the audio device to implement a shuffle function. The memory management module 150 can then select songs randomly by choosing an audio file from a randomly selected slot of the memory 135 at the end of each track. Pressing button 5 a second time can implement a repeat function, in which the memory management module 150 selects the audio file corresponding to the currently selected slot again after the audio file has finished playing. Button 6 can allow a user to select the next track for playback. For example, the controller 140 can receive input from button 6 via the corresponding user input 115. The audio playback module 160 can then stop the current track from playing, and the memory management module 150 can select the next track from the memory 135. In some implementations, the next track can be defined as the track stored in the memory slot directly to the right of the memory slot associated with the current track (e.g., the slot whose index number is one more than the index number of the current slot). After the next track has been selected, the audio playback module 160 can send a signal corresponding to the next track to the audio output 120 to cause the audio device 200 to play the track.

In some implementations, button 7 can be a stop button which, when pressed by a user, causes the current track to stop playing. A signal corresponding to button 5 can be received by the controller 140 via the corresponding user input 115. As a result, the audio playback module 160 can respond by interrupting the audio signal applied to the audio output 120 to cause audio device 200 to stop playing the current track.

In some implementations, buttons 8-10 can correspond to various vocal effects. A vocal effect can be any signal processing technique applied to an audio signal to alter the original audio signal in some way. For example, a vocal effect may increase or decrease the frequency of a given audio signal, thereby producing a signal having a higher pitch or a lower pitch than the original audio signal. In some implementations, a vocal effect can be applied to an audio signal received by the audio device 200 from a microphone. For example, the audio signal can be delivered to the controller 140 via the microphone input 105. In response to a user pressing one of the vocal effects buttons 8-10, the vocal effects module 155 can apply the appropriate vocal effect to the input signal to modify the input signal. Likewise, the vocal effects module 155 could instead apply a vocal effect to an audio signal received via the auxiliary input 110. In some other implementations, a vocal effect can be applied to an audio output signal. For example, when a track is playing, the vocal effects module 155 can respond to a user pressing one of the vocal effects buttons 8-10 by modifying the audio signal associated with the currently playing track before the signal is delivered to the audio output 120 by the audio playback module 160. It should be noted that, although Figure 2 shows three vocal effects buttons 8-10, in other implementations the audio device 200 may include more or fewer vocal effects buttons. For example, the audio device 200 may include one or two vocal effects buttons. In other implementations, the audio device 200 may include five, 10, or more vocal effects buttons.

Buttons 11 and 12 can each correspond to a built-in song. Each built-in song may be stored in a respective slot of Bucket 1 of the memory 135. Thus, when a user presses one of the buttons 11 and 12, the memory management module 150 can select the corresponding slot from the memory 135, and the audio file associated with that slot can be delivered to the audio output 120 by the audio playback module 160. In some implementations, the audio device 200 may include only a single built-in song, and thus may have only a single button corresponding to the single built-in song. In other implementations, the audio device 200 may include more than 2 built-in songs. For example, the audio device 200 may include 5, 10, 15, 20, or more built-in songs.

In some implementations, Bucket 1 of the memory 135 may not be altered by an end-user of the audio device 100. Thus, a user may not be able to record over any of the pre-recorded audio files stored in the respective slots of Bucket 1 of the memory 135. The size of Bucket 1 of the memory 135 can correspond to the number of built-in songs stored by the audio device 100. For example, the number of slots in Bucket 1 of the memory 135 can be selected to be equal to the number of built-in songs. This arrangement can help to reduce the cost of the audio device 200, because it may be unnecessary to include a number of slots in Bucket 1 of the memory 135 that is larger than the number of built-in songs. By including a number of memory slots in Bucket 1 of the memory 135 that corresponds to the number of built-in songs, the audio device 200 can have sufficient memory to store each of the built-in songs, and the inclusion of unused slots in Bucket 1 of the memory 135 can be avoided to reduce costs. In some implementations, because Bucket 1 is used to store songs that are not editable by an end-user, Bucket 1 may not include separate slots. Instead, Bucket 1 may simply include an amount of memory sufficient to store the built-in songs. This can help to avoid wasting memory resources. For example, if each slot is larger than the amount of memory required to store each of the built-in songs, including one slot for each built-in song can result in more memory than necessary being allocated to Bucket 1.

Each of the buttons 13-17 can correspond to a memory slot for a music recording. For example, music can be recorded and stored in the slots of Bucket 2 of the memory 135. Button 13 can correspond to slot 3, button 14 can correspond to slot 4, button 15 can correspond to slot 5, button 16 can correspond to slot 6, and button 17 can correspond to slot 7. A user can press and hold one of the buttons 13-17 to cause the audio device 200 to record music. In some implementations, the controller 140 can receive an indication that a user is holding one of the buttons 13-17 via the corresponding user input 115. While the user holds one of the buttons 13-17, the controller 140 can cause the audio acquisition module 145 to receive an audio signal via the auxiliary input 110 and to store the audio signal in one of the available slots of Bucket 2 of the memory 135. Recording can stop when the user releases the button or when the user presses any other button.

In some implementations, the audio signal can be received via the auxiliary cable 202. In some implementations, the auxiliary cable 202 can include an audio connector, such as a four-pole plug, at one or both ends. One end of the auxiliary cable 202 can be connected to the auxiliary input 110 and the other end can be connected to an external device. In some implementations, the external device can be a desktop computer, a tablet computer, a laptop computer, a smartphone, an mp3 player, a compact disc (CD) player, or any other device capable of producing an audio signal. The audio signal produced by such a device can be transmitted to the audio device 200 via the auxiliary cable 202. The audio acquisition module 145 can receive the audio signal, and the memory management module 150 can store the audio signal in one of the available slots of Bucket 2 of the memory 135. In some implementations, when an external device is connected to the audio device 200 via the auxiliary cable 202, the user can control audio playback on the external device by using the buttons 4-7 on the audio device 200. For example, pressing button 4 on the audio device 200 can cause the external device to play a previous track, pressing button 5 on the audio device 200 can cause the external device to toggle between a shuffle mode and a repeat mode, pressing button 6 on the audio device 200 can cause the external device to skip to the next track, and pressing button 7 on the audio device 200 can cause the external device to stop playback of the currently playing track.

As discussed above, a first end of the auxiliary cable 202 can be connected to the audio device 200 and a second end of the auxiliary cable 202 can be connected to an external device, as discussed above. In some implementations, the auxiliary cable can be connected to a headphone port of an external device, or to another port that outputs an analog audio signal. Thus, the signal received at the auxiliary input 110 can be an analog signal. The memory 135 can be a digital memory element that is unable to store analog signals. In order to store the audio output from the external device, the controller 140 can receive the analog audio signal, and the analog-to-digital (A/D) converter module 151 can convert the analog signal to a digital signal. After the received analog signal has been converted to a digital signal, the memory management module 150 can store the digital signal in the appropriate memory slot of the memory 135.

In some implementations, each of the buttons 13-17 can be associated with a respective one of the visual outputs 125. For example, a visual output 125 can be an LED or other visual indicator positioned in close proximity to a respective one of the buttons 13-17, to indicate to the user that the visual output 125 is associated with the respective button 13-17. In some implementations, the visual outputs 125 associated with the buttons 13-17 can indicate whether the memory slot associated with each button 13-17 is available for recording or is currently being used to store audio. For example, if the memory slot associated with one of the buttons 13-17 is currently being used to store audio, the visual output 125 associated with the button can be an LED that is illuminated. Similarly, if the memory slot associated with one of the buttons 13-17 is not currently being used to store audio, the visual output 125 associated with the button can be an LED that is not illuminated, indicating that the memory slot is available for recording. In some implementations, the visual outputs 125 associated with one of the buttons can blink when the user presses and holds the buttons to record music. The controller 140 can command the visual outputs 125 associated with the buttons 13-17 to be illuminated based on whether a recording has been saved for each memory slot of the memory 135, and whether the user is currently holding one of the buttons 13-17.

If the memory slot associated with any one of the buttons 13-17 is currently being used to store audio, a user can play the audio by pressing and releasing the corresponding button. The controller 140 can receive an indication that the user has pressed and released a button 13-17 via the respective user input 115, and the memory management module 150 can retrieve the audio file from the corresponding slot of Bucket 2 of the memory 135. The audio playback module 160 can then transmit the audio file to the audio output 120 to cause the audio device 100 to play the selected audio file.

In some implementations, a user can record music over an existing music recording. For example, even if the visual output 125 associated with one of the buttons 13-17 indicates that the memory slot for that button is currently being used to store audio, a user may press and hold the button to record over the existing audio recording. The audio acquisition module 145 can then receive an audio signal from the auxiliary input 110, and the memory management module 150 can replace the current recording stored in the respective slot of the memory 135 with the new audio signal received from the auxiliary input 110.

Although the device 200 is shown as having five buttons 13-17 for recording music, it should be understood that in some implementations, the audio device 200 may include more or fewer such buttons. For example, the audio device 200 may be configured to store only a single music recording, and thus may have only a single button corresponding to the single music recording. In other implementations, the audio device 200 may be configured to store more than 5 music recordings. For example, the audio device 200 may be configured to store 10, 15, 20, or more music recordings, and may therefore include a corresponding number of buttons for recording music.

Each of the buttons 18-22 can correspond to a memory slot for a voice recording. For example, voice input can be recorded and stored in the slots of Bucket 3 of the memory 135. Button 18 can correspond to slot 8, button 19 can correspond to slot 9, button 20 can correspond to slot 10, button 21 can correspond to slot 11, and button 22 can correspond to slot 12. A user can press and hold one of the buttons 18-22 to cause the audio device 200 to record voice input. In some implementations, the controller 140 can receive an indication that a user is holding one of the buttons 18-22 via a corresponding one of the user inputs 115. While the user holds one of the buttons 18-22, the controller 140 can cause the audio acquisition module 145 to receive an audio signal via the microphone input 105 and to store the audio signal in one of the available slots of Bucket 3 of the memory 135. In some implementations, if any pre-recorded music (e.g., a built-in song associated with one of the buttons 11 and 12, or a recorded song associated with one of the buttons 13-17) is playing while the user holds one of the buttons 18-22, that music can be recorded along with the voice input received from the microphone 105 and stored in the respective slot of the memory 135.

If the memory slot associated with any one of the buttons 18-22 is currently being used to store voice audio, a user can play the audio by pressing and releasing the corresponding button. The controller 140 can receive an indication that the user has pressed and released a button 18-22 via the respective user input 115, and the memory management module 150 can retrieve the audio file from the corresponding slot of the memory 135. The audio playback module 160 can then transmit the audio file to the audio output 120 to cause the audio device 100 to play the selected audio file.

In some implementations, a user can record voice audio over an existing voice recording. For example, even if the visual output 125 associated with one of the buttons 18-22 indicates that the memory slot for that button is currently being used to store audio, a user may press and hold the button to record over the existing audio recording. The audio acquisition module 145 can then receive an audio signal from the microphone input 105, and the memory management module 150 can replace the current voice recording stored in the respective slot of the memory 135 with the new audio signal received from the microphone input 105.

Although the device 200 is shown as having five buttons 18-22 for recording voice input, it should be understood that in some implementations, the audio device 200 may include more or fewer such buttons. For example, the audio device 200 may be configured to store only a single voice recording, and thus may have only a single button corresponding to the single voice recording. In other implementations, the audio device 200 may be configured to store more than 5 voice recordings. For example, the audio device 200 may be configured to store 10, 15, 20, or more music recordings, and may therefore include a corresponding number of buttons for recording voice.

In some implementations, the size of the memory 135 can correspond to the number of built-in songs, music recordings, and voice recordings that may be stored by the audio device 200. For example, the number of slots in the memory 135 can be selected to be equal to the total number of built-in song buttons 11 and 12, music recording buttons 13-17 and voice recording buttons 18-22. This arrangement can help to reduce the cost of the audio device 200, because it may be unnecessary to include a number of slots in the memory 135 that is larger than the sum of the number of buttons 11 and 13 provided for built-in songs, the number of buttons 13-17 provided for recording music and the number of buttons 18-22 provided for recording voice. By including a number of memory slots in the memory 135 that corresponds to the number of built-in song buttons 11 and 12, music recording buttons 13-17 and voice recording buttons 18-22, the audio device 200 can have sufficient memory to store a recording associated with each built-in song button 11 and 12, each music recording button 13-17, and each voice recording button 18-22, and the inclusion of unused slots in the memory 135 can be avoided to reduce costs.

In some implementations, each slot of the memory 135 can be capable of storing a predetermined amount of audio received either from the microphone input 105 or the auxiliary input 110. For example, each slot of the memory 135 can be configured to store 1, 2, 3, 4, or 5 minutes of audio. In some implementations, each slot of the memory 135 can be configured to store more than 5 minutes of audio. The total time available for audio recordings can be calculated as the number of slots in Buckets 2 and 3 of the memory 135 multiplied by the maximum time limit for each slot. For example, the total time available for audio recordings may be 5 minutes, 10 minutes, 15 minutes, 20 minutes, 25 minutes, 30 minutes, or longer. In some implementations, the total time available for audio recordings can be about 16 minutes. Likewise, the total time available for pre-recorded audio can be calculated as the number of slots in Bucket 1 of the memory 135 multiplied by the maximum time limit for each slot. For example, the total time available for pre-recorded audio may be 5 minutes, 10 minutes, 15 minutes, 20 minutes, 25 minutes, 30 minutes, or longer. In some implementations, the total time available for pre-recorded audio can be about 8 minutes.

In some implementations, the total size of the memory 135 can be fixed. However, the size of each bucket can be reconfigurable. For example, in some implementations, the number of slots associated with each bucket can be altered without altering the total size of the memory by allocating different percentages of the memory to each bucket. In some implementations, the size of each slot also can be reconfigured. For example, the size of each slot can be increased to allow a longer audio recording to be stored in each slot. In general, increasing the size of each slot can result in fewer total slots being available, because the size of the memory 135 can be fixed.

When a user records audio by holding one of the music recording buttons 13-17 or one of the voice recording buttons 18-22, the audio acquisition module 145 can record audio up to the maximum time limit associated with the respective memory slot. Thus, recording may automatically stop when the user attempts to record audio for a time that exceeds the maximum time limit for each slot. Recording may also be stopped prior to the end of the maximum time limit if the user releases the music recording button 13-17 or the voice recording button 18-22 before the time limit is reached. In this case, the visual output 125 associated with the button can indicate that the slot of the memory 135 for that button is occupied, even though the slot is not being used to store the maximum amount of audio possible.

In some implementations, when the user attempts to record music from an external device by pressing and holding one of the buttons 13-17, the audio acquisition module 145 can automatically detect silence between songs. When silence is detected, the audio acquisition module 145 can determine that the current song has ended. After the next track begins playing, the memory management module 150 can begin storing the new audio signal received by the audio acquisition module in the next available slot of Bucket 2 of the memory 135.

Figure 3A is a perspective view of a second example audio device 300a, according to an illustrative implementation. The audio device 300a can implement a subset of the functionality of the audio device 200 described above in connection with Figure 2. The audio device 300a includes a variable music volume button 301, two buttons 311 and 312 for playing built-in songs, and three buttons 313-315 for recording music. The audio device 300a also includes an auxiliary cable 302, a speaker 325, and a microphone 330.

The block diagram shown in Figure 1 also can represent the functionality of the audio device 300a, and the audio device 300a is therefore described further below with reference to the block diagram of Figure 1. For example, each of the buttons 301, 311, 312, and 313-315 can be associated with a respective one of the user inputs 115, allowing the controller 140 to receive input from a user of the audio device 300a via the user inputs 115. The music volume button 301 of the audio device 300a can be implemented as a rocker switch configured to allow a user to increase the music volume by pushing the switch in a first direction and to decrease the music volume by pushing the switch in a second direction. In other implementations, the volume button 301 can be implemented as a rotatable dial. For example, a user can increase the music volume by turning the rotatable dial in a clockwise direction, and can decrease the music volume by turning the dial in a counterclockwise direction. As discussed above, the controller 140 shown in Figure 1 can receive a signal corresponding to the music volume button 301 via a respective user input 115, and can change the volume accordingly by adjusting the audio output 120, which can be implemented as one or more audio speakers. In some implementations, the controller 140 can increase the power of an audio signal applied to the audio output 120 in response to a user request to increase the music volume. Likewise, the controller 140 can decrease the power of the audio signal applied to the audio output 120 in response to a user request to decrease the music volume.

Buttons 311 and 312 can each correspond to a built-in song. Each built-in song may be stored in a respective slot of Bucket 1 of the memory 135. Thus, when a user presses one of the buttons 311 and 312, the memory management module 150 can select the corresponding slot from the memory 135, and the audio file associated with that slot can be delivered to the audio output 120 by the audio playback module 160. In some implementations, the audio device 300a may include only a single built-in song, and thus may have only a single button corresponding to the single built-in song. In other implementations, the audio device 300a may include more than 2 built-in songs. For example, the audio device 300a may include 5, 10, 15, 20, or more built-in songs.

The size of Bucket 1 of the memory 135 can correspond to the number of built-in songs stored by the audio device 100. For example, the number of slots in Bucket 1 of the memory 135 can be selected to be equal to the number of built-in songs. This arrangement can help to reduce the cost of the audio device 300a, because it may be unnecessary to include a number of slots in Bucket 1 of the memory 135 that is larger than the number of built-in songs, as discussed above.

Each of the buttons 313-315 can correspond to a memory slot for a music recording. For example, music can be recorded and stored in the slots of Bucket 2 of the memory 135. A user can press and hold one of the buttons 313-315 to cause the audio device 300a to record music. In some implementations, the controller 140 can receive an indication that a user is holding one of the buttons 313-315 via the corresponding user input 115. While the user holds one of the buttons 313-315, the controller 140 can cause the audio acquisition module 145 to receive an audio signal via either the auxiliary input 110 or the microphone input 105, and to store the audio signal in one of the available slots of Bucket 2 of the memory 135. Recording can stop when the user releases the button or when the user presses any other button.

In some implementations, the audio signal can be received via the auxiliary cable 302 when the auxiliary cable 302 is plugged into an external device. When the auxiliary cable 302 is not plugged into an external device, the audio signal can instead be received via the microphone 330. The microphone 330 shown in Figure 3A can be internally connected to the microphone input 105 shown in Figure 1, for example. Similarly, the audio output 120 can be connected to the speaker 325.

The functionality of the buttons 313-315 can be similar to the functionality of the buttons 13-17 discussed above in connection with Figure 2. For example, in some implementations, each of the buttons 313-315 can be associated with a respective one of the visual outputs 125. The visual outputs 125 associated with the buttons 313-315 can indicate whether the memory slot associated with each button 313-315 is available for recording or is currently being used to store audio. For example, if the memory slot associated with one of the buttons 313-315 is currently being used to store audio, the visual output 125 associated with the button can be an LED that is illuminated. Similarly, if the memory slot associated with one of the buttons 313-315 is not currently being used to store audio, the visual output 125 associated with the button can be an LED that is not illuminated, indicating that the memory slot is available for recording. In some implementations, the visual outputs 125 associated with the buttons can blink when the user presses and holds the buttons to record music. The controller 140 can command the visual outputs 125 associated with the buttons 313-315 to be illuminated based on whether a recording has been saved for each memory slot of the memory 135, and whether the user is currently holding one of the buttons 313-315.

If the memory slot associated with any one of the buttons 313-315 is currently being used to store audio, a user can play the audio by pressing and releasing the corresponding button. The controller 140 can receive an indication that the user has pressed and released a button 313-315 via the respective user input 115, and the memory management module 150 can retrieve the audio file from the corresponding slot of the memory 135. The audio playback module 160 can then transmit the audio file to the audio output 120 to cause the audio device 100 to play the selected audio file.

In some implementations, a user can record music over an existing recording. For example, even if the visual output 125 associated with one of the buttons 313-315 indicates that the memory slot for that button is currently being used to store audio, a user may press and hold the button to record over the existing audio recording. The audio acquisition module 145 can then receive an audio signal from the auxiliary input 110 or the microphone input 105, and the memory management module 150 can replace the current recording stored in the respective slot of the memory 135 with the new audio signal received from the auxiliary input 110.

As discussed above, in some implementations, each slot of the memory 135 can be capable of storing a predetermined amount of audio received either from the microphone input 105 or the auxiliary input 110. For example, each slot of the memory 135 can be configured to store 1, 2, 3, 4, or 5 minutes of audio. In some implementations, each slot of the fi memory 135 can be configured to store more than 5 minutes of audio. The total time available for audio recordings can be calculated as the number of slots in Bucket 2 of the memory 135 multiplied by the maximum time limit for each slot. For example, the total time available for audio recordings may be 5 minutes, 10 minutes, 15 minutes, 20 minutes, 25 minutes, 30 minutes, or longer. In some implementations, the total time available for audio recordings can be about 16 minutes. Likewise, the total time available for pre-recorded audio can be calculated as the number of slots in Bucket 1 of the memory 135 multiplied by the maximum time limit for each slot. For example, the total time available for pre-recorded audio may be 5 minutes, 10 minutes, 15 minutes, 20 minutes, 25 minutes, 30 minutes, or longer. In some implementations, the total time available for pre-recorded audio can be about 8 minutes.
In some implementations, the memory 135 may not include any slots allocated to Bucket 3. For example, because the audio device 300a does not allow a user to record voice audio, there may be no need to allocate memory to Bucket 3. Instead, all of the slots of the memory 135 may be allocated to Bucket 1 and Bucket 2 only. Thus, a smaller memory element can be used to implement the memory 135, because only five slots are necessary (i.e., two slots for built-in songs and three slots for music recordings). In some implementations, because Bucket 1 is used to store songs that are not editable by an end-user, Bucket 1 may not include separate slots. Instead, Bucket 1 may simply include an amount of memory sufficient to store the built-in songs. This can help to avoid wasting memory resources. For example, if each slot is larger than the amount of memory required to store each of the built-in songs, including one slot for each built-in song can result in more memory than necessary being allocated to Bucket 1.

When a user records audio by holding one of the music recording buttons 313-315, the audio acquisition module 145 can record audio up to the maximum time limit associated with the respective memory slot. Thus, recording may automatically stop when the user attempts to record audio for a time that exceeds the maximum time limit for each slot. Recording may also be stopped prior to the end of the maximum time limit if the user releases the music recording button 313-315 before the time limit is reached. In this case, the visual output 125 associated with the button can indicate that the slot of the memory 135 for that button is occupied, even though the slot is not being used to store the maximum amount of audio possible.

In some implementations, when the user attempts to record music from an external device, the audio acquisition module 145 can automatically detect silence between songs. When silence is detected, the audio acquisition module 145 can determine that the current song has ended. After the next track begins playing, the memory management module 150 can begin storing the new audio signal received by the audio acquisition module in the next available slot of Bucket 2 of the memory 135.

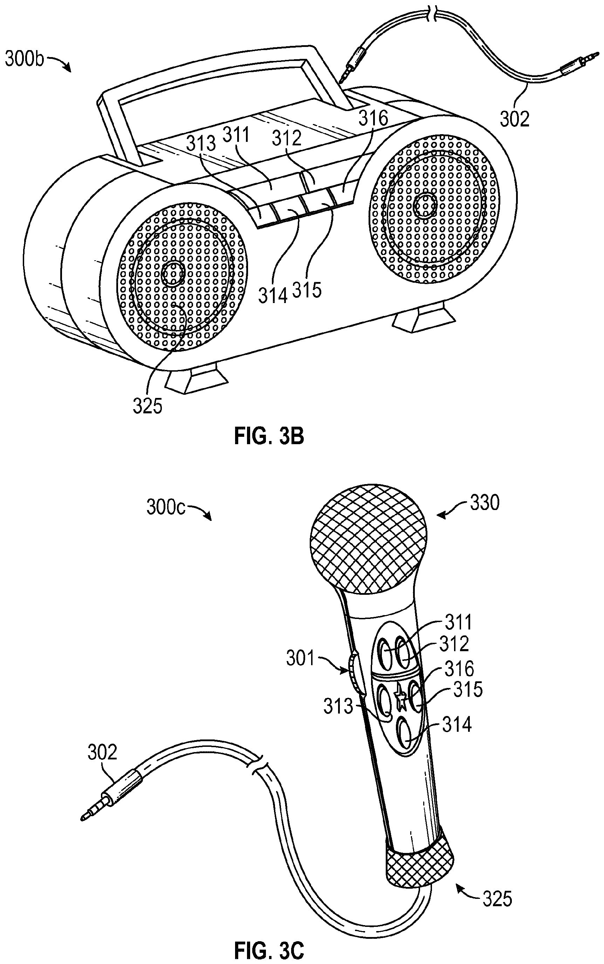

Figure 3B is a perspective view of a third example audio device 300b, according to an illustrative implementation. The audio device 300b is similar in function to the audio device 300a, and like reference numerals refer to like element. The audio device 300b differs from the audio device 300a in that the audio device 300b includes an additional audio recording button 316. The audio recording button 316 can serve the same purpose as the audio recording buttons 313-315. For example, the audio recording button 316 can have an associated memory slot in Bucket 2 of the memory 135 to allow a user to record audio.

Figure 3C is a perspective view of a fourth example audio device 300c, according to an illustrative implementation. The audio device 300c is similar to the audio device 300a, and like reference numerals refer to like elements. The audio device 300b differs from the audio device 300a in that the audio device 300c includes a voice recording button 316. The voice recording button 316 can function in a manner similar to the buttons 18-22 described above in connection with Figure 2. For example, voice input can be recorded and stored in a slot of Bucket 3 of the memory 135. A user can press and hold the button 316 to cause the audio device 300c to record voice input. In some implementations, the controller 140 can receive an indication that a user is holding the button 316 via a corresponding one of the user inputs 115. While the user holds the button 316, the controller 140 can cause the audio acquisition module 145 to receive an audio signal via the microphone input 105 and to store the audio signal in the slot of the memory 135 that is associated with the button 316, which can be allocated to Bucket 3. In some implementations, if any pre-recorded music (e.g., a built-in song associated with one of the buttons 311 and 312, or a recorded song associated with one of the buttons 313-315) is playing while the user holds the button 316, that music can be recorded along with the voice input received from the microphone 105 and stored in the respective slot of Bucket 3 of the memory 135.

If the memory slot associated with the button 316 is currently being used to store voice audio, a user can play the audio by pressing and releasing the corresponding button. The controller 140 can receive an indication that the user has pressed and released the button 316 via the respective user input 115, and the memory management module 150 can retrieve the audio file from the corresponding slot of the memory 135. The audio playback module 160 can then transmit the audio file to the audio output 120 to cause the audio device 100 to play the selected audio file.

In some implementations, a user can record voice audio over an existing voice recording. For example, even if the visual output 125 associated with the button 316 indicates that the memory slot for that button 316 is currently being used to store audio, a user may press and hold the button 316 to record over the existing audio recording. The audio acquisition module 145 can then receive an audio signal from the microphone input 105, and the memory management module 150 can replace the current voice recording stored in the respective slot of the memory 135 with the new audio signal received from the microphone input 105.

## Claims

1. A device for recording and playing audio using memory slots of a predetermined fixed size, the device comprising:
one or more audio outputs for outputting audio stored in memory on the device;
one or more audio inputs for receiving audio to be stored in memory on the device, wherein the memory is allocated into a plurality of buckets, each of the plurality of buckets comprising one or more slots of a predetermined fixed size;
a first bucket of the plurality of buckets comprising a first one or more slots of memory, each of the first one or more slots of memory storing a predetermined audio in read only memory playable via the one or more audio outputs;
a second bucket of the plurality of buckets comprising a second one or more slots of memory, each of the second one or more slots of memory configured to store audio recorded via the one or more audio inputs and playable via the one or more audio outputs;
a plurality of inputs to receive selection by a user of audio stored in memory, each of the plurality of inputs configured to correspond to a bucket of the plurality of buckets and a slot of the bucket; and
a memory manager configured to select the audio to be played via the one or more audio outputs from a selected one of the slots of a selected one of the plurality of buckets responsive to a selection of an input of the plurality of inputs corresponding to the selected bucket and the selected slot.

2. The device of claim 1, further comprising a third bucket of the plurality of buckets comprising a third one or more slots of memory, each of the third one or more slots of memory configured to receive voice input from the user via the one or more audio inputs and record the voice input in one of the third one or more slots of memory.

3. The device of claim 2, wherein the device is further configured to record the voice input while playing audio from a selected bucket and slot of at least one of the plurality of buckets, wherein the voice input and the playing audio are recorded to one of the third one or more slots of memory.

4. The device of claim 1, wherein the plurality of inputs comprises buttons selectable by the user.

5. The device of claim 4, wherein each of the plurality of slots of each of the plurality of buckets corresponds to a respective button, and wherein audio from one of the plurality of buckets and one of the plurality of slots can be played by pressing and releasing the corresponding button.

6. The device of claim 1, further comprising one or more lights corresponding to each of the plurality of inputs to indicate whether a corresponding input is selected by the user.

7. The device of claim 1, wherein each of the first one or more slots of the first bucket stores as the predetermined audio a built in song.

8. The device of claim 1, wherein the predetermined fixed size of the first one or more slots differs from the predetermined fixed size of the second one or more slots.

9. The device of claim 1, wherein the predetermined fixed size of the first one or more slots is the same as the predetermined fixed size of the second one or more slots.

10. The device of claim 1, wherein the predetermined fixed size corresponds to a predetermined amount of time of audio.

11. The device of claim 1, wherein the device is further configured to automatically stop recording audio to a slot upon reaching the predetermined fixed size of the slot.

12. The device of claim 1, wherein the device is further configured to:
automatically detect silence of a predetermined length; and
responsive to the automatic detection, record audio to a next slot in a bucket of the plurality of buckets.

13. A method for recording and playing audio using memory of a predetermined fixed size, the method comprising:
receiving, by a device having one or more audio outputs for outputting audio stored in memory on the device and one or more audio inputs for receiving audio to be stored in memory on the device, a first selection by a user of a first input of a plurality of inputs of the device;
selecting, by a memory manager of the device, audio to be played via the one or more audio outputs from a first slot of a first bucket in memory responsive to the first selection of the first input of the plurality of inputs corresponding to the first bucket and the first slot of memory, wherein the memory is allocated into a plurality of buckets including the first bucket, each of the plurality of buckets comprising one or more slots of a predetermined fixed size and wherein the first bucket of the plurality of buckets comprises the first slot of memory storing a predetermined audio in read only memory playable via the one or more audio outputs;
receiving, by the device, a second selection by the user of a second input of the plurality of inputs;
selecting, by the memory manager, a second slot of a second bucket of the plurality of buckets corresponding to the second input, the second slot of the second bucket configured to store audio recorded via the one or more audio inputs; and
storing, by the device, audio acquired via the one or more audio inputs to the second slot of the second bucket until the predetermined fixed size is reached.

14. The method of claim 12, wherein a third bucket of the plurality of buckets comprises a third one or more slots of memory, the method further comprising:
receiving, by the device, a third selection by the user of a third input of the plurality of inputs corresponding to the third bucket; and
storing, by the device, voice input acquired from the user via the one or more audio inputs in one of the third one or more slots of memory.

15. The method of claim 13, further comprising recording, by the device, the voice input while playing audio from a selected bucket and slot of at least one of the plurality of buckets, wherein the voice input and the playing audio is recorded to one of the third one or more slots of memory.

16. The method of claim 12, wherein the plurality of inputs comprises buttons selectable by the user.

17. The method of claim 15, further comprising:
receiving, by the device, an indication that a user has pressed and released a fourth input of the plurality of inputs; and
playing, by the device, audio from one of the plurality of buckets and slots corresponding to the fourth input.

18. The method of claim 12, wherein the device comprises one or more lights corresponding to each of the plurality of inputs to indicate whether a corresponding input is selected by the user, the method further comprising illuminating, by the device, one of the one or more lights, responsive to receive a selection by the user of a corresponding one of the plurality of inputs.

19. The method of claim 12, further comprising storing, by the device, in each of the first one or more slots of the first bucket, a built in song.

20. The method of claim 12, wherein the predetermined fixed size of the first slot differs from the predetermined fixed size of the second slot.

21. The method of claim 12, wherein the predetermined fixed size of the first slot is the same as the predetermined fixed size of the second slot.

22. The method of claim 12, wherein the predetermined fixed size corresponds to a predetermined amount of time of audio.

23. The method of claim 12, further comprising automatically stopping, by the device, recording audio to the second slot upon reaching the predetermined fixed size of the second slot.

24. The method of claim 12, further comprising:
automatically detecting, by the device, silence of predetermined length of time; and recording, by the device, audio to a next slot in the second bucket responsive to the automatic detection.
